# FASCICULE DE BREVET EUROPEEN

(11) **EP 2 979 336 B1**
(45) Date de publication et mention de la délivrance du brevet: **01.05.2019**
(21) Numéro de dépôt: 14715245.8
(22) Date de dépôt: 27.03.2014
(51) Int. Cl.: G01N 21/17, H01J 27/24, H01S 3/10, H01S 3/00, H01S 3/067, H01S 3/23

(54) **DISPOSITIF LASER HEURISTIQUE METTANT EN OEUVRE UN EQUIPEMENT DE PRODUCTION D'IMPULSIONS LASER, ET PROCEDE HEURISTIQUE CORRESPONDANT**
HEURISTISCHE LASERVORRICHTUNG UNTER VERWENDUNG EINER VORRICHTUNG ZUR ERZEUGUNG VON LASERIMPULSEN UND ENTSPRECHENDES HEURISTISCHES VERFAHREN
HEURISTIC LASER DEVICE USING AN APPARATUS FOR PRODUCING LASER PULSES AND CORRESPONDING HEURISTIC METHOD

(30) Priorité: 27.03.2013 FR 1352786
(43) Date de publication de la demande: 03.02.2016
(73) Titulaire: Ecole Polytechnique, 91128 Palaiseau Cedex (FR)
(72) Inventeur: MOUROU, Gérard, 75014 Paris (FR); TAJIMA, Toshiki, Foothill ranch, CA 92610 (US)
(74) Mandataire: Vidon Brevets & Stratégie
(86) Numéro de dépôt international: PCT/EP2014/056230
(87) Numéro de publication internationale: WO 2014/154842

(56) Documents cités:
- EP-A1- 1 375 052
- EP-A2- 0 980 123
- EP-A2- 1 041 686
- WO-A2-2007/034317
- FR-A1- 2 964 503
- JP-A- 2011 216 552
- US-A1- 2008 084 598

## Description

### 1. Le domaine de l'invention

La présente invention a pour objet un dispositif comprenant un équipement de production d'impulsions laser qui viennent frapper une cible, pour générer un processus physique au niveau de cette cible.

Elle concerne en particulier un tel dispositif dans lequel l'équipement peut émettre des impulsions laser de haute énergie, à haut taux de répétition.

La présente invention a également pour objet un procédé d'optimisation des caractéristiques de l'équipement d'impulsion laser.

### 2. Solutions de l'art antérieur

Les lasers à impulsion sont utilisés dans de très nombreux dispositifs connus de l'art antérieur. Dans ces dispositifs, les impulsions laser peuvent être dirigées sur une cible, afin de générer sur cette cible un processus physique prédéterminé.

A titre d'exemple, les processus physiques pouvant être causés par le laser sur la cible peuvent être un échauffement pouvant entrainer le changement d'état de la cible, par exemple pour un laser de soudage, ou un pompage optique, quand la cible est constituée par un milieu amplificateur dopé. Pour certaines applications, il est nécessaire que le laser produise des impulsions laser brèves de haute énergie.

Pour obtenir des impulsions laser très brèves et de très haute énergie, une impulsion laser produite par un oscillateur est usuellement amplifiée dans un amplificateur laser capable d'augmenter considérablement sa puissance tout en conservant la cohérence de phase et de longueur d'onde de l'impulsion.

On connaît notamment, du document EP 1 927 168, un amplificateur optique à fibres dans lequel l'impulsion laser initiale est répartie dans un grand nombre de fibres optiques amplificatrices dans lesquelles elle est amplifiée optiquement. Les impulsions amplifiées dans les différentes fibres sont ensuite rassemblées de façon à former une impulsion amplifiée globale, de très haute énergie.

Pour que cette impulsion globale soit cohérente, il est nécessaire que les phases des impulsions amplifiées dans les différentes fibres soient coordonnées. L'impulsion globale finale, qui est une impulsion composée d'une pluralité d'impulsions lumineuses juxtaposées les unes aux autres, présente ainsi les caractéristiques d'une impulsion laser cohérente.

Un tel amplificateur à fibres peut donc produire des impulsions laser très brèves ayant une très haute énergie. Par ailleurs, un tel amplificateur pouvant être refroidi efficacement, il peut également produire de telles impulsions avec un taux de répétition relativement élevé, ce qui permet d'obtenir une série d'impulsions ayant une puissance moyenne élevée. Enfin, l'efficacité énergétique d'un tel amplificateur laser est très bonne. Une telle série d'impulsions peut être utile pour plusieurs types d'applications, par exemple pour la production d'un faisceau de protons relativistes, ainsi que l'expose la demande de brevet EP 12 290 303.2 déposée au nom de la demanderesse.

Les caractéristiques des impulsions laser qui frappent la cible influent sur l'efficacité du processus physique généré par cette impulsion sur la cible. Ces caractéristiques, parmi lesquelles la durée de l'impulsion, son amplitude, sa longueur d'onde, sa largeur spectrale, et la forme de son front d'onde, sont donc généralement adaptées afin d'obtenir une bonne efficacité du processus physique généré sur la cible. Les valeurs permettant cette bonne efficacité sont souvent déterminées par des simulations informatiques.

Pour pouvoir réaliser de telles simulations informatiques, il est nécessaire de modéliser informatiquement la cible devant être frappée par les impulsions laser. On donne généralement à la cible une configuration permettant sa modélisation facile. La cible peut être ainsi de forme plane, ou être constituée par un écoulement gazeux non turbulent. De telles configurations de cibles, qui sont modélisables relativement facilement, sont parfois difficiles à obtenir, notamment quand la cible est un plasma. De plus, elles ne constituent par toujours les configurations permettant la meilleure efficacité du processus physique. Par ailleurs, quand une telle cible est frappée par une impulsion laser, l'impulsion génère une perturbation de la cible (notamment un échauffement) éloignant ses caractéristiques des caractéristiques qui ont été modélisées.

En conséquence, les simulations qui sont effectuées sur la base de cibles modélisées sont parfois assez éloignées du comportement réel de ces cibles. Il est donc difficile de déterminer, par des simulations, les caractéristiques que doivent prendre les impulsions laser pour générer un processus physique sur la cible avec une efficacité optimisée.

Par ailleurs, lorsqu'un amplificateur laser amplifie successivement un grand nombre d'impulsions, à une cadence élevée, les caractéristiques de l'amplificateur peuvent évoluer, sous l'influence des effets thermiques de l'amplification ou sous l'influence d'autres perturbations non maitrisées. Les caractéristiques des impulsions laser peuvent ainsi évoluer dans le temps, ce qui peut éloigner les valeurs de ces caractéristiques des valeurs qui ont été choisies pour optimiser la génération du processus physique.

FR 2 964 503 A1 divulgue un dispositif laser avec une pluralité de fibres optiques amplificatrices dans lesquelles une impulsion laser initiale est répartie pour y être amplifiée et des moyens de réglage de la phase spectrale desdites impulsions laser élémentaires amplifiées.

EP 1 041 686 A2 divulgue un dispositif laser avec une pluralité de fibres optiques amplificatrices dans lesquelles un faisceau laser initial est réparti pour y être amplifié.

### 3. Objectifs de l'invention

La présente invention a pour objectif de palier à ces inconvénients de l'art antérieur.

En particulier, la présente invention a pour objectif de fournir un dispositif mettant en oeuvre un laser à impulsions dont les caractéristiques sont optimisées pour générer un processus physique sur une cible frappée par les impulsions laser, avec une efficacité optimisée.

Un autre objectif de l'invention est de fournir un tel dispositif dans lequel un nombre important de caractéristiques du laser à impulsions sont optimisées pour optimiser le processus physique sur la cible.

Un autre objectif de l'invention est de fournir un tel dispositif dans lequel la cible peut présenter des configurations variées et difficilement modélisables, sans nuire à l'efficacité du processus physique généré par l'impulsion laser.

Encore un autre objectif de l'invention est de fournir un tel dispositif qui permette d'optimiser la génération d'un processus physique sur la cible quand des perturbations non maitrisées influent sur les caractéristiques des impulsions laser produites.

### 4. Exposé de l'invention

Ces objectifs, ainsi que d'autres qui apparaitront plus clairement par la suite, sont atteints selon l'invention à l'aide d'un dispositif laser comme il est défini dans la revendication indépendante 1.

Ainsi, il est possible d'optimiser la génération du processus physique par impact d'une impulsion amplifiée globale sur une cible de façon plus facile que dans l'art antérieur. En effet, on ne cherche pas ici à obtenir un laser ayant des caractéristiques parfaites, pour correspondre à une cible ayant une configuration parfaite. On cherche au contraire, de façon heuristique, c'est à dire en faisant des essais successifs pour trouver les meilleures solutions, les caractéristiques de réglage qui permettent d'obtenir une valeur optimale du ou des paramètres caractéristiques du processus physique obtenu par interaction de l'impulsion laser sur la cible entraînant un changement d'état de celle-ci, avec la cible réelle. Ainsi, pour optimiser l'impulsion laser, on ne contrôle pas les caractéristiques de cette impulsion mais son efficacité, c'est à dire le résultat obtenu avec cette impulsion.

Un amplificateur laser à fibres étant utilisé dans ce dispositif, il est possible de modifier un très grand nombre de caractéristiques des impulsions laser, très facilement. Par ailleurs, un tel amplificateur laser à fibres permet un taux de répétition important, permettant de réaliser en un temps limité un grand nombre de mesures de l'efficacité du processus physique né de l'interaction de l'impulsion laser avec la matière de la cible, pour des impulsions laser ayant des caractéristiques différentes.

Selon un mode de réalisation possible de l'invention, les moyens d'analyse comprennent des moyens de génération aléatoire de valeurs d'au moins une des caractéristiques de réglage, de façon à générer un nombre très élevé de mesures prises en compte par les moyens d'analyse.

Avantageusement, les moyens de réglage comprennent des moyens d'ajustement de la phase des impulsions laser amplifiées dans chacune des fibres amplificatrices.

Ces moyens d'ajustement de la phase permettent notamment de modifier la forme du front d'onde de l'impulsion laser globale amplifiée.

Avantageusement, les moyens de réglage comprennent des moyens d'ajustement de la puissance des impulsions laser amplifiées dans chacune des fibres amplificatrices.

Ces moyens d'ajustement de la puissance permettent de modifier la puissance de l'impulsion laser globale amplifiée, ainsi que sa distribution spatiale d'amplitude, ou de puissance.

Selon un mode de réalisation préférentiel, le processus physique généré par l'interaction de l'impulsion laser sur la cible est une émission d'un faisceau de particules, par exemple une émission d'un faisceau de protons.

Le dispositif peut ainsi permettre de déclencher des réactions nucléaires, telles que des transmutations de déchets radioactifs.

De façon avantageuse, les moyens de réglage permettent de modifier au moins l'une des caractéristiques suivantes de l'impulsion laser globale :
- forme du front d'onde de l'impulsion ;
- puissance de l'impulsion ;
- distribution spatiale d'amplitude de l'impulsion ;
- répartition ou amplitude spectrale de l'impulsion ;
- répartition spatiale ou temporelle des composantes spectrales de l'impulsion ;
- distribution spatiale ou temporelle d'amplitude de l'impulsion ;
- durée de l'impulsion.

De nombreuses caractéristiques de l'impulsion peuvent donc être adaptées, afin que l'impulsion présente les caractéristiques permettant l'optimisation du processus physique naissant de l'interaction entre l'impulsion laser et la cible. Il est à noter que ces différents paramètres étaient souvent fixés de façon arbitraire dans les solutions de l'art antérieur.

Avantageusement, l'équipement de production d'impulsions laser permet la production d'impulsions laser à une fréquence supérieure à 1 kHz, et de préférence supérieure à 10 kHz.

Un tel taux de répétition, qui est possible avec les amplificateurs laser à fibres, permet de choisir efficacement, dans un temps raisonnable, les caractéristiques de l'impulsion permettant l'optimisation du processus physique entraînant un changement d'état de la cible,

Selon l'invention, les moyens de réglages permettent de modifier les caractéristiques des impulsions laser globales produites à une fréquence supérieure à 100 Hz, et de préférence supérieure à 1 kHz.

Une telle fréquence de modification des caractéristiques des impulsions laser permet une mise en oeuvre efficace du procédé selon l'invention.

L'invention concerne également un procédé d'optimisation d'un processus physique prédéterminé généré sur une cible par une impulsion laser, ledit procédé étant défini dans la revendication indépendante 9.

Selon l'invention, ce procédé comprend une étape de détermination de caractéristiques de fonctionnement de la pluralité de fibres optiques amplificatrices permettant d'obtenir une efficacité optimale du processus physique naissant de l'interaction de l'impulsion laser avec la matière de la cible, à partir de l'analyse des résultats précédemment obtenus lors des étapes de mesure effectuées pour différents réglages.

C'est donc en se basant sur une série d'essais, dans les conditions réelles de fonctionnement, que l'on détermine les caractéristiques de fonctionnement des fibres optiques amplificatrices à utiliser, et non en se basant sur des calculs, des simulations ou des hypothèses.

Avantageusement, la sous-étape de réglage de caractéristiques de fonctionnement de chaque fibre optique amplificatrice comprend un réglage de la phase de l'impulsion traversant chaque fibre optique amplificatrice.

Avantageusement, la sous-étape de réglage de caractéristiques de fonctionnement de chaque fibre optique amplificatrice comprend un réglage de la puissance de l'impulsion amplifiée dans chaque fibre optique amplificatrice.

### 5. Liste des figures

L'invention sera mieux comprise au vu de la description suivante de modes de réalisation préférentiels, donnés à titre illustratif et non limitatif, et accompagnés de dessins parmi lesquels :
- la figure 1 est une représentation schématique d'un équipement de production d'impulsions laser de haute énergie ;
- la figure 2 est une représentation schématique de deux des fibres amplificatrices de l'équipement de production d'impulsion laser de la figure 1 ;
- la figure 3 est une représentation schématique d'un système selon un mode de réalisation de l'invention, mettant en oeuvre un équipement de production d'impulsions laser pour générer un processus physique lorsque les impulsions laser viennent frapper la cible, entraînant un changement d'état de celle-ci;
- la figure 4 est une représentation schématique des étapes d'un procédé d'optimisation heuristique selon l'invention.

### 6. Exposé d'un mode de réalisation

### 6.1 Amplificateur laser à fibres

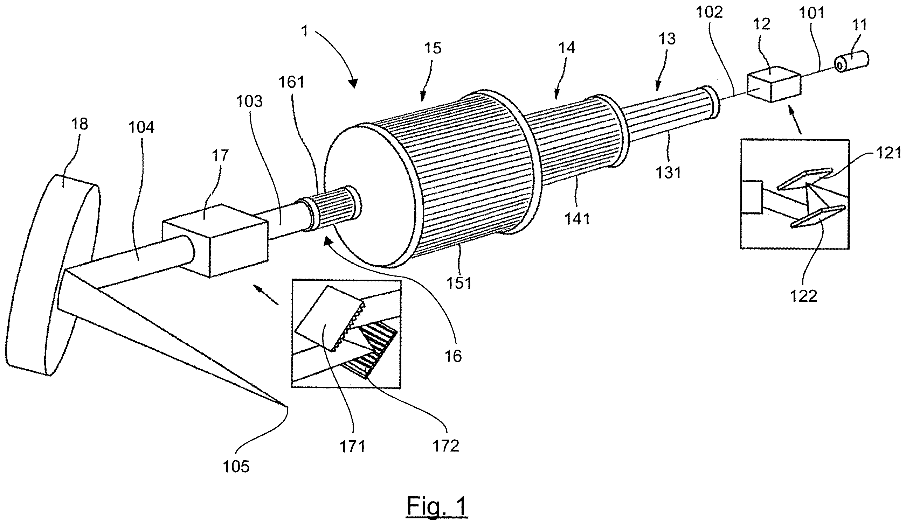

La figure 1 représente un équipement 1 de production d'impulsions laser de haute énergie.

Dans cet équipement 1, une impulsion laser 101 de faible énergie est produite par un oscillateur 11. Dans le mode de réalisation représenté, cette impulsion 101 est ensuite étirée temporellement par un dispositif étireur 12, comprenant une paire de réseaux de diffraction 121 et 122, ayant pour effet de décaler dans le temps les différentes composantes spectrales de l'impulsion originale 101 de faible énergie. L'impulsion 102 étirée présente alors une puissance de crête plus faible, et une durée plus longue que l'impulsion 101.

Cette impulsion laser 102 est ensuite répartie dans une pluralité de fibres amplificatrices 131 formant un premier étage d'amplification 13 de l'amplificateur laser à fibres. Les différentes fibres sont séparées les unes des autres, de façon à pouvoir assurer efficacement leur refroidissement. Chacune des fibres amplificatrices 131 comprend un coeur en matériau dopé, et est pompée optiquement, de façon à amplifier optiquement l'impulsion laser circulant dans la fibre. L'impulsion passant dans chacune de ces fibres amplificatrices 131 est alors amplifiée, puis est elle-même répartie dans une pluralité de fibres amplificatrices 141 formant le second étage d'amplifications 14 de l'amplificateur laser à fibres. De nouveau, l'impulsion passant dans chacune de ces fibres amplificatrices 141 est amplifiée, puis est elle-même répartie dans une pluralité de fibres amplificatrices 151 formant le troisième étage d'amplifications 15 de l'amplificateur laser à fibres. Ainsi, dans chaque étage d'amplifications, l'impulsion est amplifiée dans une pluralité de fibres indépendantes les unes des autres, puis divisée afin que des impulsions de moindre puissance soient transmises à chacune des fibres d'amplifications de niveau supérieur.

Le troisième et dernier étage d'amplification 15 comprend alors un très grand nombre de fibres amplificatrices, par exemple de l'ordre de 10⁶. Chacune des fibres amplificatrice de ce troisième étage se prolonge par une fibre de transmission 161 présentant un taux de perte très faible. Les fibres de transmission sont rassemblées en un faisceau 16 de façon que les impulsions sortant de chacune des extrémités de ces fibres de transmission 161 soient émises parallèlement et de façon juxtaposée. Ces impulsions forment alors une unique impulsion globale amplifiée 103.

Dans le mode de réalisation représenté, cette impulsion globale amplifiée est compressée temporellement par un compresseur 17 comprenant une paire de réseaux de diffractions 171 et 172, permettant de regrouper temporellement les différentes composantes spectrales de l'impulsion. L'impulsion 104 sortant de ce compresseur temporel 17 présente alors une très grande énergie et une très faible durée. Elle peut par exemple, comme le représente la figure 1, être focalisée en un point 105 grâce à un miroir concave 108.

### 6.2 Ajustement des caractéristiques de l'impulsion laser

L'amplification de l'impulsion d'origine 101 dans une pluralité de fibres amplificatrices permet de procéder à un ajustement précis de plusieurs des caractéristiques de l'impulsion laser amplifiée finale 104.

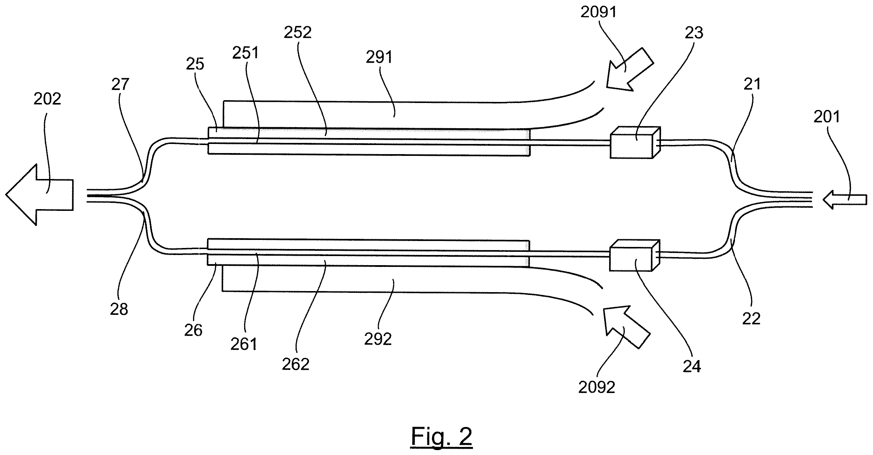

La figure 2 illustre, de façon schématique, deux des fibres amplificatrices prises parmi les fibres amplificatrices de l'équipement de production d'impulsions laser 1 de la figure 1. Cette figure n'est bien entendu pas à l'échelle, les fibres présentant dans la réalité une longueur importante. Une impulsion laser à amplifier 201, provenant par exemple d'une fibre amplificatrice d'un étage d'amplification inférieur, est envoyée simultanément dans deux fibres optiques 21 et 22.

La fibre optique 21 conduit cette impulsion jusqu'à une fibre amplificatrice 25, en traversant un modulateur 23. Le modulateur 23 est un cristal dont la longueur peut être ajustée en fonction du besoin. Il peut être par un exemple un modulateur électro-optique, constitué par un cristal piézoélectrique dont la longueur varie en fonction d'une tension appliquée à ses bornes. Selon un autre mode de réalisation possible, il peut être un cristal acousto-optique, dont la longueur varie en fonction d'une onde mécanique qui lui est appliquée. Un tel modulateur 23 permet de faire varier, en fonction du besoin, la longueur du trajet parcouru par l'impulsion lumineuse.

La fibre amplificatrice 25 présente deux coeurs. Son coeur central 251 est en matériau laser dopé, et conduit l'impulsion lumineuse provenant de la fibre optique 21. Un coeur périphérique 252, entourant le coeur central 251, conduit la lumière de pompage, destinée à pomper optiquement le matériau laser du coeur central 251. Cette lumière de pompage peut être transmise dans ce coeur périphérique par une fibre d'alimentation 291, dans laquelle est envoyée la lumière d'une diode laser de pompage 2091. Ainsi, le matériau laser du coeur central 251 est pompé optiquement, et l'impulsion laser circulant dans ce coeur est amplifiée optiquement.

Le coeur central de la fibre présentant des caractéristiques de propagation de type monomode, chaque fibre amplificatrice se comporte comme un amplificateur parfait. A la sortie de la fibre amplificatrice 25, l'impulsion laser provenant du coeur central 25 est conduite par une fibre de transmission 27.

De la même façon, la fibre optique 22 conduit l'impulsion 201 jusqu'à une fibre amplificatrice 26, en traversant un modulateur 24. Cette impulsion parcourt le coeur central 261, en matériau laser dopé, de la fibre amplificatrice 26, qui a préalablement été pompé optiquement par la lumière d'une diode laser de pompage 2092, passant dans une fibre d'alimentation 292 puis dans le coeur périphérique 262 entourant le coeur central 261. L'impulsion laser circulant dans ce coeur central 261 est donc amplifiée optiquement, avant de sortir dans une fibre de transmission 28.

A l'extrémité du faisceau formé par les différentes fibres de transmission, parmi lesquelles les fibres 27 et 28, une impulsion amplifiée globale 202 se forme. Cette impulsion est avantageusement composée d'un grand nombre d'impulsions élémentaires, par exemple de l'ordre de 10⁶, issues chacune d'une fibre amplificatrice. Après une certaine longueur de propagation, cette impulsion amplifiée globale, composite car issue des impulsions élémentaires venant de chacune des fibres, présente les caractéristiques d'une impulsion unique. Cependant, la nature composite de cette impulsion permet d'en faire varier certaines caractéristiques facilement.

### Variation de puissance

Ainsi, la puissance de l'impulsion laser émise par chaque fibre amplificatrice pouvant varier en fonction de la puissance de la diode laser de pompage pompant cette fibre, il est possible de faire varier à volonté la puissance de chaque impulsion élémentaires composant l'impulsion amplifiée globale. La variation de la puissance de pompage, et donc de la puissance de l'impulsion élémentaire amplifiée, peut être obtenue très facilement, avec une grande précision, de l'ordre de 1%, et avec un temps de réponse de l'ordre de la milliseconde (kHz). En faisant varier de façon coordonnée la puissance de chacune des impulsions élémentaires amplifiées, il est possible de faire varier, à volonté, la distribution spatiale d'amplitude, ou de puissance, de l'impulsion amplifiée globale.

Ainsi, en fonction du besoin, il est possible d'obtenir une distribution spatiale d'amplitude Gaussienne, ou hyper-Gaussienne, ou au contraire une distribution uniforme, ou tout autre type de distribution. Il est également possible, bien évidemment, de faire varier de la même façon la puissance totale de l'impulsion amplifiée globale.

### Variation du front d'onde

Par ailleurs, les modulateurs, notamment 23 et 24, présents sur le trajet de chaque impulsion élémentaire permettent de faire varier la longueur du trajet des impulsions. Il est ainsi possible de régler la phase de chaque impulsion élémentaire, et en conséquence de donner au front d'onde de l'impulsion amplifiée globale 202 la forme désirée, avec une grande précision. Les modulateurs ayant un temps de réponse très rapide, il est possible de changer la forme du front d'onde avec une grande fréquence, de l'ordre de 1 kHz.

D'autres paramètres permettent d'influer sur la phase d'une impulsion élémentaire, amplifiée par une fibre amplificatrice. Ainsi, quand on fait varier la puissance d'un laser de pompage, on fait varier le dégagement de chaleur au niveau de la fibre amplificatrice. Cette variation de chaleur peut entrainer une dilatation ou une rétractation de l'ensemble de cette fibre, qui modifie alors la phase de l'impulsion à la sortie de la fibre de transmission.

Une telle variation de phase peut ne pas être souhaité, si on souhaite uniquement modifier le taux d'amplification dans la fibre, et donc la puissance de l'impulsion de sortie, sans changer sa phase. Dans ce cas, il est possible de compenser une dilatation ou une rétractation en agissant simultanément sur le modulateur correspondant, afin de conserver une phase identique en sortie. Dans d'autres cas, au contraire, il est souhaitable de faire varier simultanément la puissance de l'impulsion et sa phase.

Dans un mode de réalisation spécifique, il est possible que la fibre amplificatrice soit dopée par deux types de particules dopantes distinctes. Un premier type de particules dopantes permet, classiquement, de produire la réaction laser amplifiant l'impulsion. Le second type de particules dopantes, choisi pour ne pas interférer avec la longueur d'onde de l'impulsion à amplifier, a uniquement pour objectif de générer des effets thermiques dans la fibre. Un laser de pompage spécifique peut être prévu pour pomper ces particules dopantes du second type, et ainsi générer des effets thermiques faisant varier la phase de l'impulsion laser sans faire varier sa puissance.

### Variation des autres caractéristiques de l'impulsion

Il est également possible d'agir sur d'autres caractéristiques de l'impulsion amplifiée globale. A titre d'exemple, il est possible de faire varier la distribution spectrale de l'impulsion. Il est pour cela nécessaire de décomposer spectralement l'impulsion afin que ses différentes composantes spectrales soient amplifiées par des fibres amplificatrices différentes. Il est alors possible d'amplifier chaque composante spectrale de façon distincte. Si les fibres acheminant les différentes composantes spectrales sont réparties de façon uniforme dans le faisceau des fibres permettant l'émission de l'impulsion amplifiée globale, il est également possible de faire varier la répartition spatiale des composantes spectrales dans cette impulsion.

L'homme du métier, en fonction de l'utilisation des impulsions amplifiées globales, peut ainsi imaginer un grand nombre de paramètres sur lesquels il est possible d'influer pour optimiser l'impulsion.

### 6.3 Utilisation des impulsions laser pour produire un processus physique

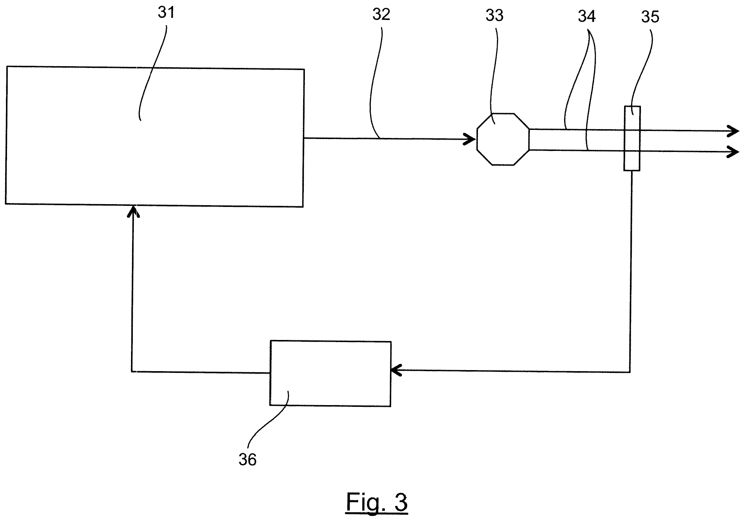

La figure 3 est une représentation schématique d'un dispositif laser selon un mode de réalisation de l'invention, mettant en oeuvre un équipement de production d'impulsions laser 31 pour générer un processus physique naissant de l'interaction de l'impulsion laser avec la cible. Cet équipement de production d'impulsions laser comprend un amplificateur laser à fibres, par exemple du type représenté par la figure 1.

Cet équipement produit une impulsion laser amplifiée, représentée par la flèche 32, qui est dirigé vers une cible 33. A titre d'exemple, dans le mode de réalisation représenté, cette cible 33 peut être un film d'hydrogène (H) ou d'hélium (He). Selon l'invention, il n'est pas nécessaire que cette cible présente une forme particulière visant à faciliter sa modélisation. En effet, il n'est pas nécessaire, selon l'invention, de déterminer par des simulations les caractéristiques que doivent prendre les impulsions laser.

L'impulsion laser 32 produit après impact sur la cible 33 un processus physique. Par exemple, si l'impulsion laser présente une énergie suffisante, elle génère lorsqu'elle frappe la cible un faisceau de protons 34 relativiste, partant de la cible 33 à la vitesse de la lumière. Ce faisceau de protons 34 peut par la suite être utilisé pour générer d'autres réactions.

### Mesure du processus physique

Des moyens de mesure 35 permettent de mesurer l'efficacité du processus physique se produisant au niveau de la cible 33 lorsqu'elle est frappée par l'impulsion laser. Dans l'exemple présenté, ces moyens de mesure sont composés de deux capteurs, l'un permettant de compter le nombre de protons 34 émis par la cible 33 lorsque sa matière interagit avec l'impulsion laser, et l'autre permettant de mesurer l'énergie de ces protons.

### 6.4 Procédé heuristique de réglage des impulsions laser

Les mesures de l'efficacité du processus physique naissant de l'interaction de l'impulsion laser avec la cible et provoquant un changement d'état de celle-ci, mesurées par le capteur 35, sont envoyées à des moyens de calcul, par exemple constitués par un ordinateur 36. Cet ordinateur 36 peut par ailleurs commander les différents paramètres permettant de faire varier les caractéristiques de l'impulsion laser 32. Il peut par exemple commander les modulateurs et les diodes laser de pompage pour chacune des fibres amplificatrices de l'équipement de production d'impulsions laser 31. Ainsi, cet ordinateur peut faire varier les caractéristiques de l'impulsion laser 32, entre deux impulsions.

Ainsi, quand on souhaite utiliser l'impulsion laser pour produire un processus physique, on peut effectuer le tir d'une première impulsion laser 32 avec des caractéristiques choisies arbitrairement. Lors de ce premier tir, l'ordinateur 36 enregistre les mesures de l'efficacité du processus physique, puis modifie les caractéristiques de l'impulsion laser 32, avant un second tir. De nombreux tirs successifs d'impulsions laser 32 sont ainsi réalisés, avec des caractéristiques différentes, notamment de forme de front d'onde et de distribution spatiale d'amplitude. L'efficacité du processus physique est mesurée pour chaque tir, afin de déterminer quelles sont les caractéristiques de l'impulsion laser qui permettent d'obtenir la meilleure efficacité.

Cette série de tirs d'impulsions laser, destinés à permettre à l'ordinateur de déterminer les caractéristiques de l'impulsion laser les mieux adaptées, peut se faire en un temps restreint. En effet, l'équipement de production d'impulsions laser 31, s'il est du type représenté à la figure 1, peut effectuer des tirs d'impulsions laser à très haute fréquence, allant jusqu'à 10 kHz. Les variations des caractéristiques de l'impulsion laser 32 produites, et notamment de la puissance, de la répartition spatiale d'amplitude et de la forme du front d'onde, peuvent être effectuées à une fréquence de l'ordre de 1 kHz.

L'ordinateur peut donc effectuer en un temps restreint un grand nombre de mesures, sur des plages de valeurs prédéterminées pour chaque paramètre, ou qui sont déterminées par l'ordinateur lui-même en fonction des résultats mesurés de l'efficacité du processus physique. Une fois ces mesures effectuées, l'ordinateur peut selon le programme qu'il exécute, choisir de continuer à effectuer les tirs d'impulsions laser 32 avec les paramètres testés permettant la meilleure efficacité du processus physique, en fonction d'un critère prédéterminé, ou effectuer une nouvelle série de tirs sur des plages de valeur restreintes pour les différents paramètres, paraissant prometteuses au vu des résultats de la première série de tirs.

Il est à noter que l'ordinateur 36 ne réalise pas un asservissement de l'équipement de production d'impulsions laser 31 en fonction du résultat mesuré par le capteur 35. En effet, il serait nécessaire, pour réaliser un asservissement, de savoir sur quels paramètres de l'équipement de production d'impulsions laser 31 il faut agir pour obtenir une modification souhaitée de la mesure de sortie. Ici, au contraire, le nombre trop important de paramètres sur lesquels il est possible d'agir empêche la mise en oeuvre d'une boucle classique d'asservissement.

Au contraire, le système comprenant l'équipement de production d'impulsions laser 31, la cible 33, le capteur 35 et l'ordinateur 36, est heuristique, en ce sens qu'il effectue une série d'essais pouvant être plus ou moins concluants, et qu'il détermine, en fonction des résultats de ces essais, les conditions dans lesquelles il peut fonctionner de façon plus efficace. Le système procède donc par approches successives en éliminant progressivement les alternatives et en ne conservant qu'une gamme restreinte de solution tendant vers celle qui est optimale.

Une fois que l'ordinateur 36 a déterminé la combinaison optimale de paramètres pour les impulsions laser 32, le système peut continuer à fonctionner selon ces paramètres. Dans certains cas, il peut cependant être utile, en cours de fonctionnement, de tester de nouveaux des paramètres différents, afin de vérifier que les conditions optimales de fonctionnement n'ont pas évoluées. Il est à noter que ces paramètres, qui prennent notamment en compte la forme réelle de la cible 33, peuvent être déterminés grâce à ce fonctionnement de type heuristique sans connaître la forme de la cible.

### 6.6 Procédé heuristique d'optimisation du processus physique

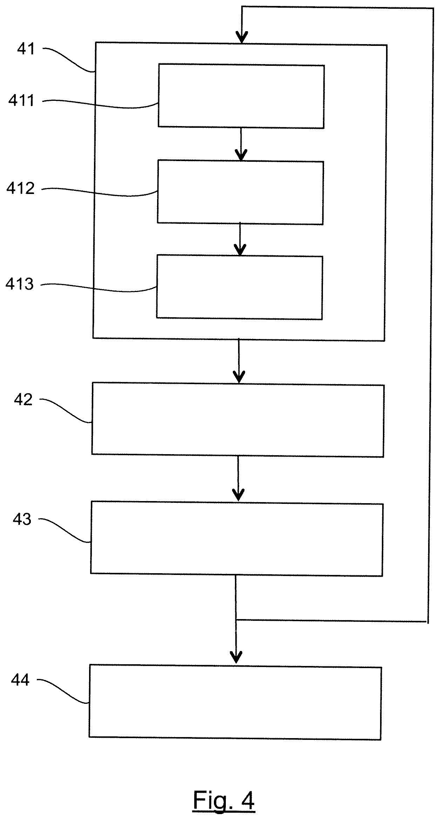

La figure 4 représente, de façon schématique, les étapes du procédé heuristique d'optimisation d'un processus physique généré sur une cible par une impulsion laser, selon l'invention.
Le principe général de ce procédé est tel que, de la même manière que le dispositif laser selon la présente invention, il comprend les étapes suivantes :
- une étape (41) de production d'une impulsion laser amplifiée, amplifiée à une fréquence supérieure à 100 Hz par une pluralité de fibres optiques amplificatrices dans lesquelles une impulsion laser initiale (101) est répartie pour y être amplifiée, lesdites des impulsions élémentaires amplifiées par lesdites fibres optiques amplificatrices étant regroupées en une impulsion amplifiée globale, une étape (42) d'impact de ladite impulsion amplifiée globale sur une cible pour y générer un processus physique prédéterminé entraînant un changement d'état de ladite cible ;
et particulièrement selon l'invention :
- une étape (43) de mesure d'au moins un paramètre caractéristique dudit processus physique généré lors de l'impact de ladite impulsion amplifiée globale sur ladite cible ;
- une étape de réglage (411) d'au moins une caractéristique de réglage desdites impulsions laser élémentaires amplifiées, ladite au moins une caractéristique étant prédéterminée en fonction de l'utilisation desdites impulsions laser élémentaires amplifiées ;
les étapes de production d'une impulsion, d'impact, de mesure et de réglage étant répétées au moins deux fois délivrant une pluralité de mesures pour différents réglages,
et en outre selon l'invention :
- une étape (44) de détermination d'un réglage optimal de la ou desdites caractéristiques de réglage permettant d'obtenir une valeur optimale du ou desdits paramètres caractéristiques du processus physique à partir de ladite pluralité de mesures délivrée pour différents réglages.

Plus précisément, ce procédé comprend une étape 41 de production d'une impulsion laser amplifiée, qui est mise en oeuvre dans un équipement de production d'impulsions laser comprenant un amplificateur laser à fibres. Cette étape 41 comprend elle-même :
- une sous-étape 411 de réglage de caractéristiques de fonctionnement de chaque fibres optiques amplificatrices de l'amplificateur laser à fibre, par exemple la longueur du trajet optique, pour modifier la phase de l'impulsion traversant la fibre, ou la puissance de pompage, pour modifier le taux d'amplification de l'impulsion traversant la fibre ;
- une sous étape 412 de répartition d'une impulsion laser initiale dans les fibres optiques amplificatrices ; et
- une sous-étape 413 de regroupement des impulsions amplifiés dans lesdites fibres optiques amplificatrices en une impulsion laser amplifiée globale.

Le procédé comprend ensuite une étape 42 d'impact de l'impulsion laser amplifiée globale sur une cible pour y générer un processus physique correspondant à un changement d'au moins une partie de la cible lorsque l'impulsion laser interagit avec la matière de la cible et une étape 43 de mesure de l'efficacité de ce processus physique.

Ces trois étapes de production d'une impulsion 41, d'impact 42 et de mesure 43 sont répétées en boucle de très nombreuses fois. Il est ainsi possible de mesurer l'efficacité, en d'autres termes au moins un paramètre caractéristique, du processus physique pour un grand nombre de configurations (réglages) des caractéristiques de fonctionnement de chaque fibres optiques amplificatrices de l'amplificateur laser à fibre.

Après que ces étapes soient répétées plusieurs fois, il est possible de mettre en oeuvre une étape 44 de choix de caractéristiques de fonctionnement de ladite pluralité de fibres optiques amplificatrices permettant d'obtenir une efficacité optimale du processus physique, selon un critère prédéterminé. Ce critère peut par exemple être la puissance du processus physique généré par impact de l'impulsion laser sur au moins une partie de la cible.

Il est à noter que l'étape 44 de choix de caractéristiques de fonctionnement peut être exécuté sur un microprocesseur. Ce même microprocesseur peut également, avantageusement, commander les sous-étapes 411 de réglage de caractéristiques de fonctionnement de chaque fibres optiques amplificatrices de l'amplificateur laser à fibre, avant la mise en oeuvre des sous-étapes 412.

### 6.7 Conditions d'application

Un système heuristique selon l'invention peut être utilisé pour de nombreuses applications. Cependant, un fonctionnement de type heuristique ne peut être mis en oeuvre de façon efficace que quand la fréquence de tir, ou le taux de répétition, de l'équipement de production d'impulsions laser est importante, c'est à dire supérieure à 100 Hz, et de préférence supérieure à 1 kHz. Dans le cas contraire, le grand nombre d'essais nécessités par la démarche de type heuristique risque en effet de prendre un temps excessif.

Par ailleurs, un tel système heuristique présente un intérêt particulier quand l'amplificateur laser utilisé est un amplificateur à fibres, par exemple du type représenté à la figure 1. En effet, dans un tel amplificateur laser dans lequel l'impulsion amplifiée globale est formée par une pluralité d'impulsions élémentaires qui sont amplifiées dans des fibres amplificatrices indépendantes, le nombre de paramètre pouvant influer sur l'impulsion amplifiée globale est extrêmement important. Le fonctionnement de type heuristique permet, dans un tel laser, d'optimiser de façon fine des paramètres qui n'était pas optimisés dans l'art antérieur, comme la forme du front d'onde et la distribution spatiale d'amplitude de l'impulsion.

### 6.5 Autres possibilités d'application

Dans le mode de réalisation présenté ci-dessus, le tir des impulsions laser sur la cible permet de générer un faisceau de protons relativistes. Un système selon l'invention peut cependant être mis en oeuvre pour d'autres applications dans lesquelles des impulsions laser sont émises sur une cible afin d'y générer des processus physiques. Dans ce cas, le fonctionnement de type heuristique peut être réalisé en analysant les caractéristiques du processus physique généré sur la cible.

L'homme du métier pourra ainsi imaginer de nombreuses autres applications possibles d'un système ou d'un procédé selon l'invention.

## Revendications

1. Dispositif laser comprenant :
- un équipement de production d'impulsions laser amplifiées (1) à un taux de répétition supérieur à 100 Hz, comprenant une pluralité de fibres optiques amplificatrices (131, 141, 151) dans lesquelles une impulsion laser initiale (101) est répartie pour y être amplifiée, et des moyens de regroupement (161) des impulsions élémentaires amplifiées par lesdites fibres optiques amplificatrices en une impulsion amplifiée globale (103), et
- une cible (33) sur laquelle ladite impulsion amplifiée globale (32) est dirigée, pour y générer, après impact, un processus physique prédéterminé entraînant un changement d'état de ladite cible,
**caractérisé en ce que ledit dispositif laser** comprend :
- des moyens de mesure (35) d'au moins un paramètre caractéristique dudit processus physique généré après impact de ladite impulsion amplifiée globale sur ladite cible,
- des moyens de réglage d'au moins une caractéristique de réglage desdites impulsions laser élémentaires amplifiées, ladite au moins une caractéristique étant prédéterminée en fonction de l'utilisation desdites impulsions laser élémentaires amplifiées dans ledit processus physique ;
ledit équipement de production d'impulsions laser amplifiées (1), lesdits moyens de mesure (35) et lesdits moyens de réglage étant mis en oeuvre en boucle au moins deux fois,
**et en ce que ledit dispositif laser comprend** :
- des moyens d'analyse (36) d'une pluralité de mesures délivrées par lesdits moyens de mesure, pour différents réglages assurés par lesdits moyens de réglage, déterminant un réglage optimal de la ou desdites caractéristiques de réglage permettant d'obtenir une valeur optimale du ou desdits paramètres caractéristiques du processus physique.

2. Dispositif selon la revendication 1, **caractérisé en ce que** lesdits moyens de réglage comprennent des moyens d'ajustement de la phase des impulsions laser amplifiées dans chacune desdites fibres amplificatrices (131, 141, 151).

3. Dispositif selon l'une quelconque des revendications 1 et 2, **caractérisé en ce que** lesdits moyens de réglage comprennent des moyens d'ajustement de la puissance des impulsions laser amplifiées dans chacune desdites fibres amplificatrices (131, 141, 151).

4. Dispositif selon l'une quelconque des revendications 1 à 3, **caractérisé en ce que** le processus physique généré par ladite impulsion laser sur la cible (33) est une émission d'un faisceau de particules.

5. Dispositif selon la revendication 4, **caractérisé en ce que** le processus physique généré par interaction de ladite impulsion laser sur la cible (33) est une émission d'un faisceau de protons (34).

6. Dispositif selon l'une quelconque des revendications 1 à 5, **caractérisé en ce que** lesdits moyens de réglage permettent de modifier au moins l'une des caractéristiques suivantes de l'impulsion laser globale :
- forme du front d'onde de l'impulsion ;
- puissance de l'impulsion ;
- distribution spatiale d'amplitude de l'impulsion ;
- répartition ou amplitude spectrale de l'impulsion ;
- répartition spatiale ou temporelle des composantes spectrales de l'impulsion ;
- distribution spatiale ou temporelle d'amplitude de l'impulsion ;
- durée de l'impulsion.

7. Dispositif selon l'une quelconque des revendications 1 à 6, **caractérisé en ce que** ledit équipement de production d'impulsions laser permet la production d'impulsions laser à un taux de répétition supérieur à 1 kHz.

8. Dispositif selon l'une quelconque des revendications 1 à 7, **caractérisé en ce que** lesdits moyens de réglages permettent de modifier les caractéristiques des impulsions laser globales produites à un taux de répétition supérieur à 100 Hz.

9. Procédé d'optimisation d'un processus physique prédéterminé généré sur une cible par une impulsion laser, ledit procédé comprenant les étapes suivantes :
- une étape (41) de production d'une impulsion laser amplifiée, amplifiée à un taux de répétition supérieur à 100 Hz par une pluralité de fibres optiques amplificatrices dans lesquelles une impulsion laser initiale (101) est répartie pour y être amplifiée, lesdites impulsions élémentaires amplifiées par lesdites fibres optiques amplificatrices étant regroupées en une impulsion amplifiée globale, une étape (42) d'impact de ladite impulsion amplifiée globale sur une cible pour γ générer un processus physique prédéterminé entraînant un changement d'état de ladite cible ;
**caractérisé en ce qu'il comprend** :
- une étape (43) de mesure d'au moins un paramètre caractéristique dudit processus physique généré lors de l'impact de ladite impulsion amplifiée globale sur ladite cible ;
- une étape de réglage (411) d'au moins une caractéristique de réglage desdites impulsions laser élémentaires amplifiées, ladite au moins une caractéristique étant prédéterminée en fonction de l'utilisation desdites impulsions laser élémentaires amplifiées dans ledit processus physique ;
lesdites étapes de production d'une impulsion, d'impact, de mesure et de réglage étant répétées en boucle au moins deux fois délivrant une pluralité de mesures pour différents réglages,
**et en ce que ledit procédé comprend en outre** une étape (44) de détermination d'un réglage optimal de la ou desdites caractéristiques de réglage permettant d'obtenir une valeur optimale du ou desdits paramètres caractéristiques du processus physique à partir de ladite pluralité de mesures délivrée pour différents réglages.

10. Procédé selon la revendication 9, **caractérisé en ce que** ladite sous-étape (411) de réglage d'au moins une caractéristique de réglage desdites impulsions laser élémentaires amplifiées comprend un réglage de la phase de l'impulsion traversant chaque fibre optique amplificatrice.

11. Procédé selon l'une quelconque des revendications 9 et 10, **caractérisé en ce que** ladite sous-étape (411) de réglage d'au moins une caractéristique de réglage desdites impulsions laser élémentaires amplifiées comprend un réglage de la puissance de l'impulsion amplifiée dans chaque fibre optique amplificatrice.

## Patentansprüche

1. Laservorrichtung, umfassend:
- eine Ausrüstung zur Erzeugung von verstärkten Laserpulsen (1) mit einer Pulsrate über 100 Hz, umfassend eine Vielzahl von optischen Verstärkungsfasern (131, 141, 151), in denen ein initialer Laserpuls (101) verteilt wird, um hier verstärkt zu werden, und Mittel zum Zusammenführen (161) der durch die optischen Verstärkungsfasern verstärkten elementaren Pulse zu einem verstärkten Gesamtpuls (103), und
- ein Ziel (33), auf das der verstärkte Gesamtpuls (32) gerichtet wird, um hier nach dem Auftreffen einen vorbestimmten physikalischen Prozess zu erzeugen, der eine Zustandsänderung des Ziels bewirkt,
**dadurch gekennzeichnet, dass** die Laservorrichtung umfasst:
- Mittel zum Messen (35) mindestens eines charakteristischen Parameters des physikalischen Prozesses, der nach dem Auftreffen des verstärkten Gesamtpulses auf das Ziel erzeugt wird,
- Mittel zur Regelung mindestens einer Regelcharakteristik der verstärkten elementaren Laserpulse, wobei das mindestens eine Merkmal in Abhängigkeit der Verwendung der verstärkten elementaren Laserpulse in dem physikalischen Prozess vorbestimmt ist;
wobei die Ausrüstung zur Erzeugung von verstärkten Laserpulsen (1), die Messhilfsmittel (35) und die Regelungsmittel mindestens zweimal in Schleife eingesetzt werden,
und dadurch, dass die Laservorrichtung umfasst:
- Mittel zur Analyse (36) einer Vielzahl von von den Messhilfsmitteln gelieferten Messungen für verschiedene von den Regelungsmitteln sichergestellten Regelungen, wobei eine optimale Regelung der Regelcharakteristik(a) bestimmt wird, die es ermöglicht, einen optimalen Wert des oder der charakteristischen Parameter des physikalischen Prozesses zu erhalten.

2. Vorrichtung nach Anspruch 1, **dadurch gekennzeichnet, dass** die Regelungsmittel Mittel zur Anpassung der Phase der verstärkten Laserpulse in jeder der Verstärkungsfasern (131, 141, 151) umfasst.

3. Vorrichtung nach einem der Ansprüche 1 und 2, **dadurch gekennzeichnet, dass** die Regelungsmittel Mittel zur Anpassung der Leistung der verstärkten Laserpulse in jeder der Verstärkungsfasern (131, 141, 151) umfassen.

4. Vorrichtung nach einem der Ansprüche 1 bis 3, **dadurch gekennzeichnet, dass** der durch den Laserpuls auf dem Ziel (33) erzeugte physikalische Prozess eine Emission eines Partikelstrahls ist.

5. Vorrichtung nach Anspruch 4, **dadurch gekennzeichnet, dass** der durch Interaktion des Laserpulses auf dem Ziel (33) erzeugte physikalische Prozess eine Emission eines Protonenstrahls (34) ist.

6. Vorrichtung nach einem der Ansprüche 1 bis 5, **dadurch gekennzeichnet, dass** die Regelungsmittel es ermöglichen, mindestens eines der folgenden Merkmale des globalen Laserpulses zu verändern:
- Form der Wellenfront des Pulses;
- Leistung des Pulses;
- Raumverteilung der Amplituden des Pulses;
- Spektralverteilung oder -amplitude des Pulses;
- räumliche oder zeitliche Verteilung der Spektralkomponenten des Pulses;
- räumliche oder zeitliche Verteilung der Amplitude des Pulses;
- Dauer des Pulses.

7. Vorrichtung nach einem der Ansprüche 1 bis 6, **dadurch gekennzeichnet, dass** die Ausrüstung zur Erzeugung von Laserpulsen die Erzeugung von Laserpulsen mit einer Pulsrate über 1 kHz ermöglicht.

8. Vorrichtung nach einem der Ansprüche 1 bis 7, **dadurch gekennzeichnet, dass** die Regelungsmittel es ermöglichen, die Merkmale der erzeugten globalen Laserpulse bei einer Pulsrate über 100 Hz zu verändern.

9. Verfahren zur Optimierung eines auf einem Ziel durch einen Laserpuls erzeugten vorbestimmten physikalischen Prozesses, wobei das Verfahren die folgenden Schritte umfasst:
- einen Schritt (41) der Erzeugung eines verstärkten Laserpulses, der auf eine Pulsrate über 100 Hz durch eine Vielzahl von Verstärkungsfasern verstärket wird, in denen ein initialer Laserpuls (101) verteilt wird, um hier verstärkt zu werden, wobei die durch die optischen Verstärkungsfasern verstärkten elementaren Pulse zu einem verstärkten Gesamtpuls zusammengefasst werden, einen Schritt (42) des Auftreffens des verstärkten Gesamtpulses auf ein Ziel, um hier einen vorbestimmten physikalischen Prozess zu erzeugen, der zu einer Zustandsänderung des Ziels führt;
**dadurch gekennzeichnet, dass** es umfasst:
- einen Schritt (43) des Messens mindestens eines charakteristischen Parameters des beim Auftreffen des verstärkten Gesamtpulses auf dem Ziel erzeugten physikalischen Prozesses;
- einen Schritt (411) der Regelung mindestens einer Regelcharakteristik der verstärkten elementaren Laserpulse, wobei die mindestens eine Charakteristik in Abhängigkeit von der Verwendung der in dem physikalischen Prozess verstärkten elementaren Laserpulse vorbestimmt wird;
wobei die Schritte der Erzeugung eines Pulses, des Auftreffens, des Messens und der Regelung in einer Schleife mindestens zweimal wiederholt werden und eine Vielzahl von Messungen für verschiedene Regelungen liefern,
und **dadurch gekennzeichnet, dass** das Verfahren ferner einen Schritt (44) der Bestimmung einer optimalen Reglung der Regelcharakteristik(a) umfasst, die es ermöglicht, einen optimalen Wert des oder der charakteristischen Parameter des physikalischen Prozesses auf Basis der gelieferten Vielzahl von Messungen für verschiedene Regelungen zu erhalten.

10. Verfahren nach Anspruch 9, **dadurch gekennzeichnet, dass** der Unterschritt (411) der Reglung mindestens einer Regelcharakteristik der verstärkten elementaren Laserpulse eine Reglung der Phase des durch jede optische Verstärkungsfaser hindurchgehenden Pulses umfasst.

11. Verfahren nach einem der Ansprüche 9 und 10, **dadurch gekennzeichnet, dass** der Unterschritt (411) der Regelung mindestens einer Regelcharakteristik der verstärkten elementaren Laserpulse eine Reglung der Leistung des verstärkten Pulses in jeder optischen Verstärkungsfaser umfasst.

## Claims

1. Laser device comprising:
- an apparatus (1) for producing amplified laser pulses at a repetition rate higher than 100 Hz, comprising a plurality of amplifier optical fibers (131, 141, 151) in which an initial laser pulse (101) is distributed in order to be amplified therein, and means (161) for gathering together elementary pulses amplified by said amplifier optical fibers into an overall amplified pulse(103), and
- a target (33) on to which said overall amplified pulse (32) is directed, to generate therein, after impact, a predetermined physical process leading to a change in state of said target,
**characterized in that said laser device** comprises:
- means (35) for measuring at least one characteristic parameter of said physical process generated after impact by said overall amplified pulse on said target,
- means for setting at least one setting characteristic of said amplified elementary laser pulses, said at least one characteristic being predetermined as a function of the use of said amplified elementary laser pulses in said physical process;
said apparatus for producing amplified laser pulses (1), said means for measuring (35) and said means for setting being implemented at least twice,
**and in that said laser device comprises:**
- means (36) for analyzing a plurality of measurements delivered by said means for measuring, for different settings made by said means for setting, determining an optimal setting of said setting characteristic or characteristics making it possible to obtain an optimal value of said characteristic parameter or parameters of the physical process.

2. Device according to claim 1, **characterized in that** said means for setting comprise means for adjusting the phase of the amplified laser pulses in each of the amplifier fibers (131, 141, 151).

3. Device according to any one of the claims 1 and 2, **characterized in that** said means for setting comprise means for adjusting the power of the laser pulses amplified in each of the amplifier fibers (131, 141, 151).

4. Device according to any one of the claims 1 to 3, **characterized in that** the physical process generated by the interaction of the laser pulse on the target (33) is an emission of a particle beam.

5. Device according to claim 4, **characterized in that** the physical process generated by interaction of said laser pulse on the target (33) is an emission of a proton beam (34).

6. Device according to any one of the claims 1 to 5, **characterized in that** said means for setting enable the modifying at least one of the following characteristics of the overall laser pulse:
- shape of the wave front of the pulse;
- power of the pulse;
- spatial distribution of amplitude of the pulse;
- spectral amplitude or spread of the pulse;
- spatial or temporal spread of the spectral components of the pulse;
- spatial or temporal distribution of amplitude of the pulse;
- duration of the pulse.

7. Device according to any one of the claims 1 to 6, **characterized in that** said apparatus for producing laser pulses enables the production of laser pulses at a repetition rate higher than 1 kHz.

8. Device according to any one of the claims 1 to 7, **characterized in that** said means for setting enables modifying the characteristics of the overall laser pulses produced at a repetition rate higher than 100 Hz.

9. Method for optimizing a predetermined physical process generated on a target by a laser pulse, said method comprising the following steps:
- a step (41) for producing an amplified laser pulse, amplified at a repetition rate higher than 100 Hz by a plurality of amplifier optical fibers over which an initial laser pulse (101) is distributed in order to be amplified therein, said elementary pulses amplified by said amplifier optical fibers being gathered together into an overall amplified pulse, a step (42) of impact of said overall amplified pulse on a target to generate therein a predetermined physical process leading to a change in state of said target;
**characterized in that it comprises:**
- a step (43) for measuring at least one characteristic parameter of said physical process generated during the impact of said overall amplified pulse on said target,
- a step (411) for setting at least one setting characteristic of said amplified elementary laser pulses, said at least one characteristic being predetermined as a function of the use of said amplified elementary laser pulses in said physical process;
said steps for producing a pulse, impact, measuring and setting being repeated at least twice delivering a plurality of measurements for different settings,
**and in that said method further comprises** a step (44) for determining an optimal setting characteristic or characteristics making it possible to obtain an optimal value of said characteristic parameter or parameters of the physical process from said plurality of measurements delivered for different settings.

10. Method according to claim 9, **characterized in that** said sub-step (411) for setting at least one setting characteristics of said amplified elementary laser pulses comprises a setting of the phase of the pulse passing through each amplifier optical fiber.

11. Method according to any one of the claims 9 and 10, **characterized in that** said sub-step (411) for setting at least one setting characteristics of said amplified elementary laser pulses comprises a setting of the power of the amplified pulse in each amplifier optical fiber.
